# EUROPEAN PATENT APPLICATION

(11) **EP 1 473 630 A2**
(43) Date of publication of application: **03.11.2004**
(21) Application number: 04008592.0
(22) Date of filing: 08.04.2004
(51) Int. Cl.: G06F 9/445

(54) **Computer system and method of setting an interface card therein**

(30) Priority: 11.08.2003 KR 2003055306; 11.04.2003 KR 2003022852
(71) Applicant: SAMSUNG ELECTRONICS CO., LTD., Suwon-City, Kyungki-do (KR)
(72) Inventor: Cho, Dae-Woo, Gwanak-gu Seoul (KR)
(74) Representative: Grünecker, Kinkeldey, Stockmair & Schwanhäusser Anwaltssozietät

(57) **Abstract**

A computer system and a method of setting an interface card therein that can be directly used without any separate setting of the interface card. In a computer system having a display device, an input device, a storage medium, a processor, an operating system, and a local bus capable of performing data transmission with the processor for a predetermined timing, the computer system includes at least one extension slot, provided in the computer system, for connecting with the local bus, and at least one interface card, detachably mounted in the extension slot, for loading built-in driver programs and environmental setting values to the operating system when the computer system is booted in a state that the interface card connects with the extension slot.

## Description

### CROSS-REFERENCE TO RELATED APPLICATIONS

This application claims the benefit of Korean Patent Application No. 2003-22852 filed April 11, 2003, and Korean Patent Application No. 2003-55306 filed August 11, 2003, in the Korean Intellectual Property Office, the disclosure of which is incorporated herein by reference.

### BACKGROUND

### 1. Field of the Invention

Systems and methods consistent with the present invention relate to a computer system, and more particularly, to a computer system and a method of setting an interface card therein which can be directly used without any separate setting of the interface card.

### 2. Description of the Related Art

Generally, a computer system includes a processor, a mouse, a storage medium such as a hard disc drive (HDD), an input device such as a keyboard, and a display device such as a monitor or a liquid crystal display (LCD). The computer system also includes an operating system for driving hardware, such as Windows available from Microsoft Corporation, Linux, Unix, etc.

Meanwhile, the computer system is provided with extension slots in order to add diverse additional functions thereto. Typically, in such extension slots, Peripheral Component Interconnect-based (PCI-based) or International Standard Atmosphere-based (ISA-based) interfaces are mounted. These interfaces are mounted in or detached from the extension slots in a state that a power supply of the computer system is turned off. In order for the computer system to recognize the interface cards, the operating system requires driver programs for recognizing and driving the interface cards. Typically, such driver programs are available from a vendor who provides the interface cards through a CD-ROM or a diskette.

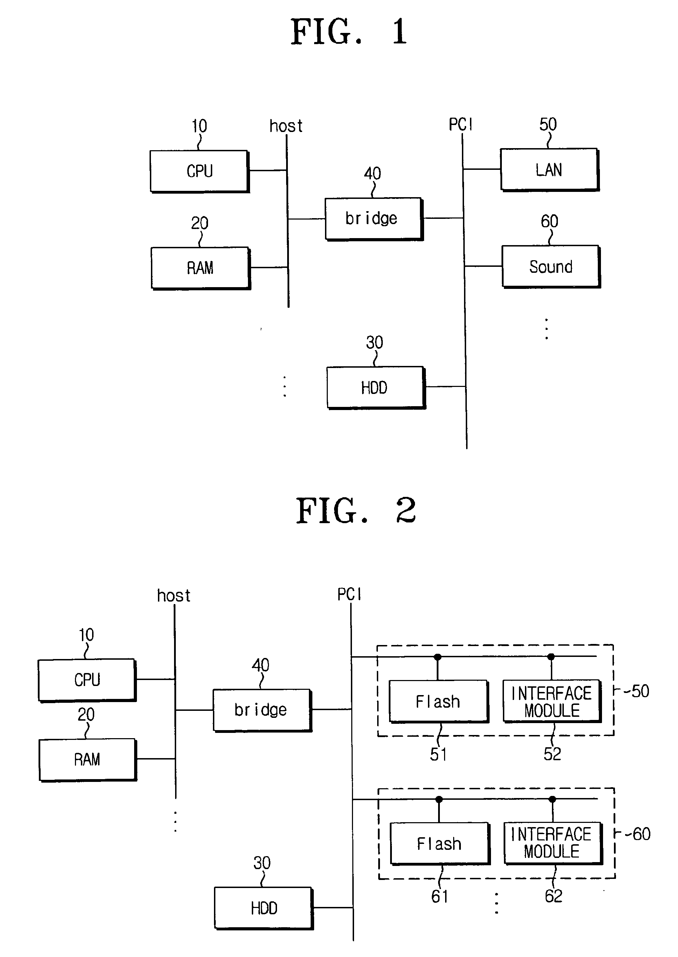

FIG. 1 is a block diagram of a conventional computer system. Referring to FIG. 1, the conventional computer system includes a central processing unit (CPU) 10, a RAM 20, a hard disc drive (HDD) 30, a bridge 40, and interface cards such as a local area network (LAN) card 50 and a sound card 60 for connecting with the computer system.

The CPU 10 controls the whole computer system, and is connected to a high-speed host bus along with the RAM 20. The CPU 10 reads out the operating system from the HDD 30 during the initialization of the computer system. At this time, by the operating system read out from the HDD 30, the computer system recognizes the mounted interface cards, and activates functions of the recognized interface cards such as the LAN card 50 and the sound card 60.

The bridge 40 controls the data transmission timing between the high-speed host bus and a low-speed Peripheral Component Interface (PCI) bus.

The LAN card 50 serves to connect the computer system with the Internet (not illustrated), and the sound card 60 serves to reproduce and record sound through the computer system.

Meanwhile, in the case of adding a new interface card to the computer system as constructed above, it is very difficult for a person who has a poor knowledge of the corresponding technical field to make the operating system recognize the newly connected interface card. For instance, in the case of adding an IEEE1394 interface card to the computer system, a driver program should be installed in the computer system after booting the computer system, and under certain circumstances, the environment of the installed driver program should be set. Further, in the case of using the Windows operation system available from Microsoft Corporation as the operating system of the computer system, a different driver program should be installed according to the kind of the Windows operating system, for example, Windows 98, Windows NT, Windows XP, etc., in order to use a new interface card. In other words, the conventional computer system has the drawback in that it is not easy for a general user to install an interface card that supports a new interface or to perform a proper environmental setting thereof.

### SUMMARY

An aspect of the invention is to solve at least the above-identified problems and/or disadvantages and to provide at least the advantages described hereinafter.

Another aspect of the present invention is to provide a computer system which facilitates the installation and use of an interface card even though a user of the computer system performs no separate setting of the interface card.

To achieve the above aspects and/or other features of the present invention, there is provided a computer system having a display device, an input device, a storage medium, a processor, an operating system, and a local bus capable of performing data transmission with the processor for a predetermined timing, the computer system comprising at least one extension slot, provided in the computer system, for connecting with the local bus, and at least one interface card, detachably mounted in the extension slot, for loading built-in driver programs and environmental setting values to the operating system when the computer system is booted in a state that the interface card connects with the extension slot.

In an exemplary embodiment, the interface card comprises an interface module connectable with the local bus, and a memory device for storing the driver programs for making the interface module recognized to the operating system and the environmental setting values.

In an exemplary embodiment, the memory device is divided into first and second partitions, and the driver programs and the environmental setting values are stored in the first and second partitions.

In an exemplary embodiment, the first partition is performed by the operating system when the computer system is booted, and is provided with a scripter file for detecting information on the operating system.

In an exemplary embodiment, the first partition is provided with the driver programs corresponding to the respective operating systems, and loads any one of the provided driver programs to the operating system according to a kind of the operating system detected by the scripter file.

In an exemplary embodiment, the second partition loads any one of the stored environmental setting values according to a kind of the operation system detected by the scripter file.

In an exemplary embodiment, the operating system is a Unix-series operating system, and is provided with a virtual file system.

In an exemplary embodiment, the operating system mounts the interface card by the virtual file system, and sets the driver programs and the environmental setting values stored in the interface card in one tree structure.

In an exemplary embodiment, the virtual file system analyzes a file format that the interface card has, and connects a file that the interface card has to the tree structure of the file format that the operating system has according to a result of analysis.

In another aspect of the present invention, there is provided an interface card mountable in a computer system driven by a specified operating system and provided with an extension slot for inserting the interface card therein, the interface card comprising a connection unit detachably mounted in the extension slot, an interface module electrically connected with the extension slot by the connection unit, and a memory device for loading a driving program for the interface module and environmental setting values for the interface module to the operating system mounted in the computer system.

In an exemplary embodiment, the memory device stores therein a driver program corresponding to the operating system.

In an exemplary embodiment, the memory device further comprises environmental setting values corresponding to the driver program.

In an exemplary embodiment, the memory device is divided into first and second partitions, and the driver programs and the environmental setting values are stored in the first and second partitions.

In an exemplary embodiment, the first partition is performed by the operating system when the computer system is booted, and is provided with a scripter file for detecting information on the operating system.

In an exemplary embodiment, the first partition is provided with the driver programs corresponding to at least one operating system, and loads any one of the provided driver programs to the operating system according to a kind of the operating system detected by the scripter file.

In an exemplary embodiment, the second partition loads any one of the stored environmental setting values according to a kind of the operation system detected by the scripter file.

In still another aspect of the present invention, there is provided a method of setting an interface card in a computer system comprising a display device, an input device, a storage medium, a processor, an operating system, a local bus capable of performing data transmission with the processor for a predetermined timing, and at least one interface card connectable to and releasable from the local bus, the method comprising booting the computer system, detecting the interface card having built-in driver programs and environmental setting values, and loading the driver programs and the environmental setting values built in the detected interface card to the operating system.

In an exemplary embodiment, the driver programs and the environmental setting values are sequentially applied to the operating system when the computer system is booted.

In an exemplary embodiment, the operating system is a Unix-series operating system, and is provided with a virtual file system.

In an exemplary embodiment, loading the driver programs and the environmental setting values comprises mounting the driver program built in the interface card in a tree structure when the computer system is booted, and mounting the environmental setting values of the mounted interface card in the tree structure.

### BRIEF DESCRIPTION OF THE DRAWINGS

The above aspects and other advantages of the present invention will become more apparent by describing in detail the exemplary embodiments thereof with reference to the attached drawings in which:

FIG. 1 is a block diagram of a conventional computer system;

FIG. 2 is a block diagram of a computer system consistent with an exemplary embodiment of the present invention;

FIG. 3 is a view illustrating an external shape of a mother board to which the interface cards illustrated in FIG. 2 are connected;

FIG. 4 is a view illustrating an external shape of the interface card illustrated in FIG. 2;

FIG. 5 is a block diagram of the interface card illustrated in FIG. 2;

FIG. 6 is a view illustrating a file structure of the operating system in the case that the operating system of the computer system consistent with the present invention is a Linux-series operating system; and

FIG. 7 is a flowchart illustrating a method of setting an interface card consistent with an exemplary embodiment of the present invention.

### DETAILED DESCRIPTION OF THE EXEMPLARY EMBODIMENTS

Now, a computer system and a method of setting an interface card therein consistent with exemplary embodiments of the present invention will be described in detail with reference to the annexed drawings in which like reference numerals refer to like elements.

FIG. 2 is a block diagram of a computer system consistent with an exemplary embodiment of the present invention.

Referring to FIG. 2, the computer system comprises a processor, i.e., a CPU 10, a RAM 20, a HDD 30, a bridge 40, and interface cards 50 and 60 detachably mounted in the computer system.

The processor 10 controls the whole computer system, and is connected to a high-speed host bus along with the RAM 20. The processor 10 reads out the operating system from the HDD 30 when the computer system is initialized.

The HDD 30 mounts therein the operating systems for driving the computer system and various kinds of application programs.

The bridge 40 is for data transmission between the high-speed host bus and a low-speed PCI bus, and controls the data transmission timing between the high-speed host bus and the low-speed PCI bus.

The interface cards 50 and 60 are connected to the PCI bus, and implements functions additionally required by the computer system, for example, functions of sound input/output, Internet connection, moving image editing, home network construction, etc. In order to implement such functions of the interface cards 50 and 60, they should be recognized to the operating system, and the driver programs for driving the interface cards and the environmental setting values should be loaded.

In an exemplary embodiment of the present invention, the interface cards 50 and 60 comprise interface modules 52 and 62, and flash ROMs 51 and 61 for storing driver programs required for recognizing and driving the operating system and environmental setting values, respectively. During the initialization of the computer system, i.e., when the operating system is booted, the flash ROMs 51 and 61 load the driver programs and the environmental setting values corresponding to the kind of operating system, to the operating system, and thus it is not required to install a separate driver program for recognizing the operating system when a new interface card is mounted in the computer system.

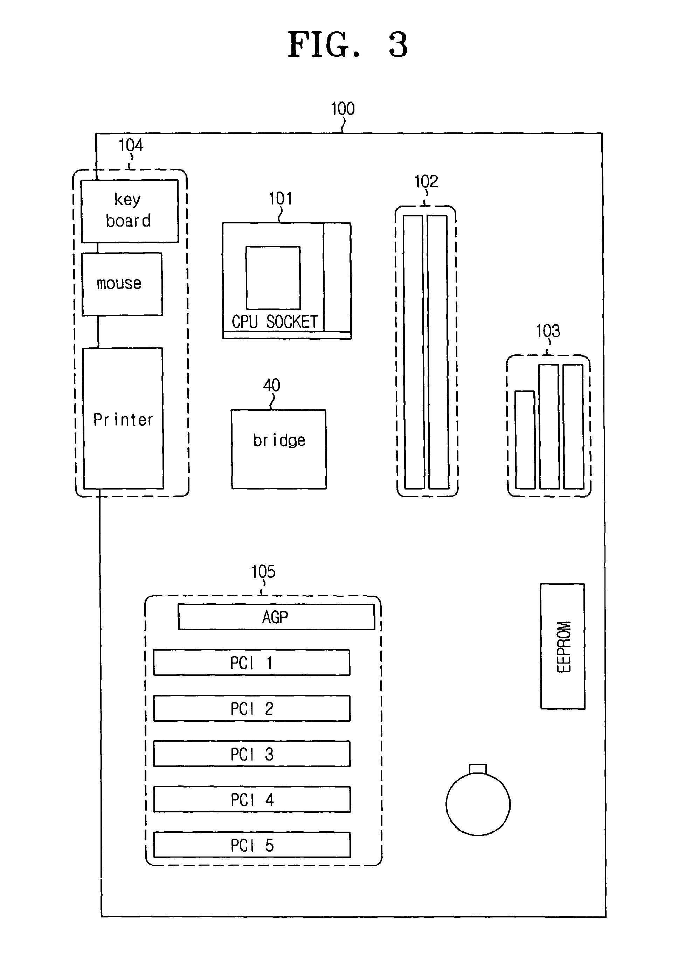

FIG. 3 is a view illustrating an external shape of a mother board 100 to which the interface cards illustrated in FIG. 2 are connected.

Referring to FIG. 3, the mother board 100 includes a CPU socket 101 for mounting the processor, a RAM socket 102 for mounting the RAM 20, a connector 103 for connecting the HDD, an input/output connection unit 104 for connecting keyboard, a mouse and a printer, and extension slots (AGP and PCI 1 to PCI 5) 105 for connecting other interface cards.

PCI 1 to PCI 5 of the extension slots 105 are connected to the PCI bus, and are constructed to perform data transmission/reception with the processor 10 and the memory device 20 by the bridge 40 illustrated in FIG. 2. The extension slots 105 are prepared to implement additional functions, for example, a sound function, a graphic interface function, etc., to the compute system, and facilitates the mounting and detaching of the interface cards as needed by a user.

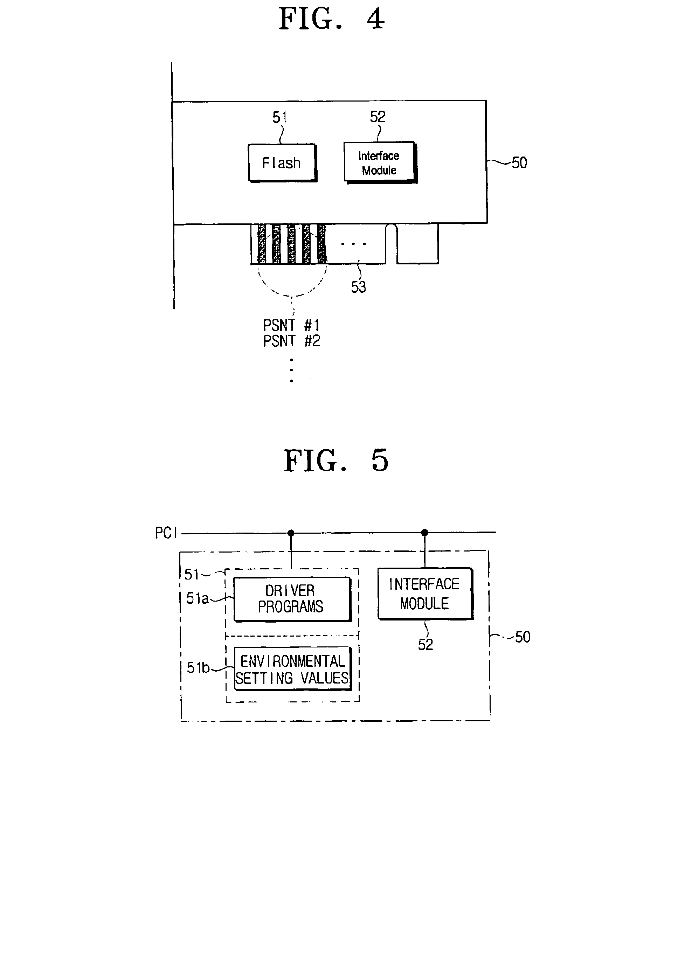

FIG. 4 is a view illustrating an external shape of the interface card 50 illustrated in FIG. 2.

Referring to FIG. 4, the interface card 50 consistent with the present invention comprises a flash ROM 51, an interface module 52 and a PCI connection unit 53.

The interface module 52 supports a specified function, and the flash ROM 51 stores the driver programs and the environmental setting values for making the interface module 52 recognized to the computer system.

In the PCI connection unit 53, 94 connection pins are prepared for connecting to the extension slots PCI 1 to PCI 5 provided in the computer system. The 9th and 11th pins of the B surface of the interface card 50, just in the case that the interface card operates in a voltage level of 3.3V, are for informing the existence of the interface card 50 to the computer system when the interface card 50 is connected to the extension slots PCI 1 to PCI 5. The detailed specification thereof is described at page 154-171, Chapter 4.3 to 4.4 of the PCI Spec. 2.1 Version distributed by Intel Corporation, and the detailed explanation thereof will be omitted.

FIG. 5 is a block diagram of interface card 50 illustrated in FIG. 2.

Referring to FIG. 5, the interface card 50 is provided with an interface module 52 and a flash ROM 51, and the flash ROM 51 is divided into a first partition 51a for storing the driver programs and a second partition 51b for storing the environmental setting values.

The flash ROM 51 has a Journaling Flash File System (JFFS) file format, and may be divided into partitions in the same manner as the HDD 30.

The first partition 51a has a built-in scripter file for detecting the driver program and the operating system for making the interface module 52 recognized by the operating system, and automatically loading the corresponding driver program to the operating system.

The driver programs are provided for each operating system that can be used by the interface card. For example, the driver programs are stored for the respective operating programs such as Windows 98, Windows 2000, Windows ME and Windows XP. Also, the first partition is provided with driver programs for Unix and Linux operating systems.

The scripter file, which is provided in the first partition 51a of the flash ROM 51, is a program that detects information on the booted operating system when the computer system is booted and loads the driver program corresponding to the detected information to the operating system. Consistent with the present invention, a manufacturer who manufactures the interface card prepares the scripter file. Table 1 below shows an example of a scripter file for a sound interface card prepared so as to be suitable for the Linux-series operating system.

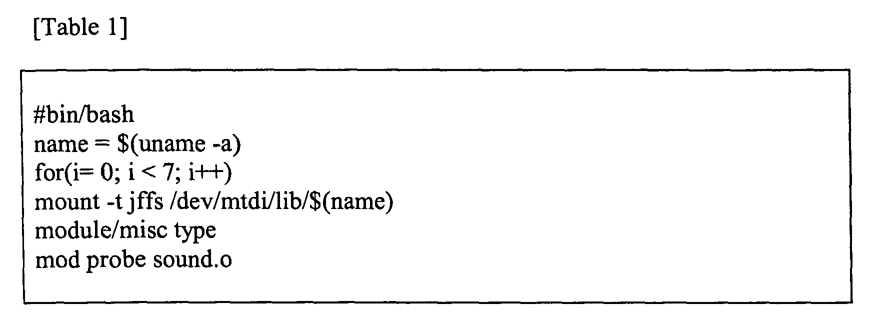

The term "#/bin/bash" of the first line denotes a command that is prepared by the user through the input device such as a keyboard, and is automatically executed by the operating system when the computer system is booted.

The file of this type has a driving system similar to the automatic batch file (autoexec.bat) of the MicroSoft Disk Operating System (MS-DOS) of Microsoft Corporation. That is, this file is a batch file that is performed with the driving of the operating system temporarily stopped after the kernel of a Linux operating system is loaded into the system memory.

The term "name = $(uname -a)" of the second line denotes a command for storing the kind of the operating system or the version of the operating system. The term "for i=0; i < 7; i++" of the third line denotes a command prepared on the assumption that the number of extension slots (AGP and PCI 1 to PCI 5) 105 provided in the computer system is 7 at maximum, and detects whether the interface card is connected to the respective extension slot by increasing a value of a variable i one by one. The term "mount -t jffs /dev/mtdi /lib/$(name)" of the third line denotes a command for mounting the contents of a variable "name" that contains information on the kind of the operating system or the version of the operating system in dev/mtdi /lib/$(name) according to the jffs file format in the order of detection of the extension slots if the extension slots connected to the interface cards are detected from the extension slots (AGP and PCI 1 to PCI 5). The terms "module/misc type" of the fourth line and "mod probe sound.o" of the fifth line denote a command for storing the respective mounted files and a command for loading the driver programs to the kernel, respectively.

As described above, when the computer system is booted, the operating system can load the driver programs provided in the flash memory 51 of the interface cards 50 and 60 for each kind of operating system by executing the scripter file after the operating system is loaded into the RAM 20. Therefore, even a user who has a poor knowledge of the computer system can easily install the driver program of the interface card.

Meanwhile, after the driver program in the first partition 51a is loaded to the operating system, the environmental setting values stored in the second partition 51b may not be loaded as needed. For example, if the interface cards 50 and 60 are Ethernet interface cards and the Internet is operated by a moving Internet Protocol (IP), a separate environmental setting such as an IP setting, Domain Name System (DNS) setting, etc., is not required. In this case, the manufacturer of the interface cards, if the environment driven by the moving IP is detected, should prepare the scripter file so that the environmental setting values stored in the second partition 51b are not loaded to the operating system.

The second partition 51b loads the environmental setting values of the recognized interface module 52 to the operating system after the interface module 52 is recognized to the operating system by the driver program. The operating system sequentially loads the driver programs and the environmental setting values from the interface cards 50 and 60, and thus it is not required for the user of the computer system to perform a separate setting of the interface cards when connecting a new interface card to the extension slots (AGP and PCI 1 to PCI 5) 105. Here, a Windows-series operating system such as Windows XP, Windows 2000, Windows 98, Windows ME, etc., Linux-series operating system, and Unix-series operating system may be used.

If the interface card 50 is an Ethernet card, the environmental setting values may be information on an Information Provider (IP) to be used in the operating system, gateway setting values, DNS setting values, etc., and if the interface card is the sound card, the environmental setting values may be the number of interrupts to be used by the sound interface card, memory address information on memory required for driving the sound interface card, etc.

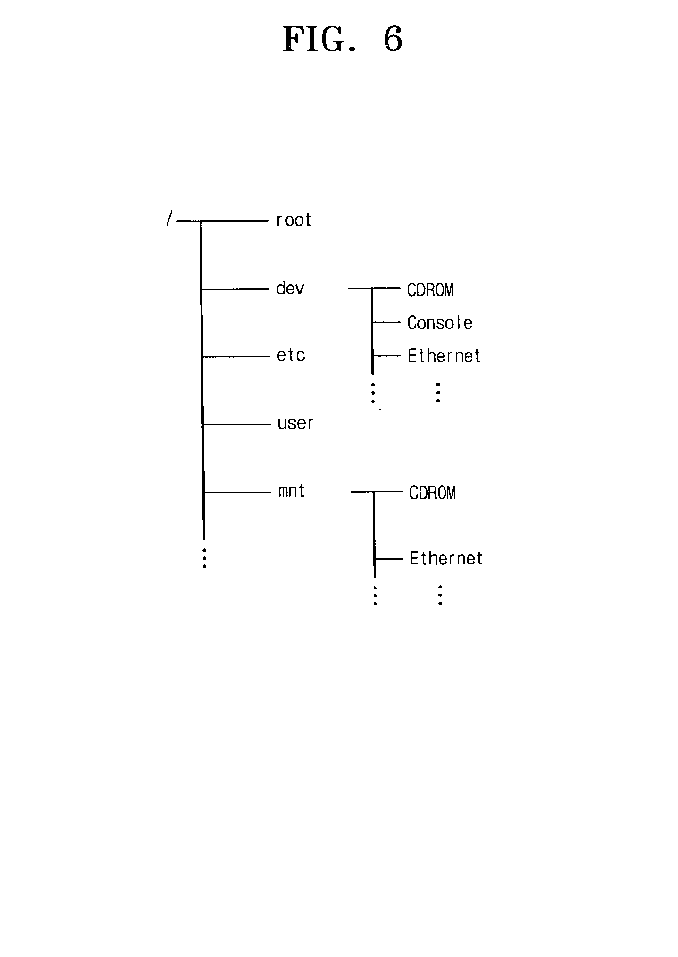

FIG. 6 is a view illustrating a file structure of the operating system in the case that the operating system of the computer system consistent with the present invention is a Linux-series operating system.

Referring to FIG. 6, the file structure has an uppermost directory (/), a root directory (root) that is a main directory for a manager of the computer system, a device directory (dev) for storing driver programs for driving various kinds of devices connected to the computer system, a directory (etc) for storing the environmental setting values of the device connected to the computer system in association with the driver program, and a directory (mnt) for mounting the file system stored in the device. Although the file structure may have other directories, they are unnecessary in understanding the present invention, and thus the detailed explanation thereof will be omitted. The additional directory structures are described in detail in "The Linux kernel" written by Linus Tornalds.

The feature of the Linux-series or Unix-series operating system is a virtual file system that can access diverse file formats (for example, minix, msdos, os/2, ext, ext2, JFFS, etc.) in comparison to the Windows-series operating system that can access only one file format (for example, FAT32). The virtual file system enables the access of data of devices having file formats different from that of the operating system by converting the file formats of the devices (for example, HDD, flash memory, CDROM, etc.) having the different file formats into a format similar to the file format (for example, ext2) of the Linux operating system and so on. For example, the file format (for example, ext2) mostly used in the Linux operating system is expressed by a data block, additional information on data stored in the data block, and an inode having position information and so on, and by expressing the data according to the different file format by the data block and the Virtual File System (VFS) inode, it is possible to access the device even if the file formats of the operating system and the device to be accessed by the application program driven under the operating system are not known.

The directory (mnt) comprises devices (for example, HDD, flash ROM, etc.) having various kinds of file formats in the directory structure based on the above-described virtual file system. In the drawing, an Ethernet card having a CD-ROM having a file format of an iso file system (isofs) standard and a flash ROM having a JFFS file format is illustrated. These file formats are expressed as sub-directories of the directory (mnt) among the directories provided in the operating system by the virtual file system, and the operating system and the application program that operates based on the operating system can record data in the devices or read out data from the devices irrespective of their file formats.

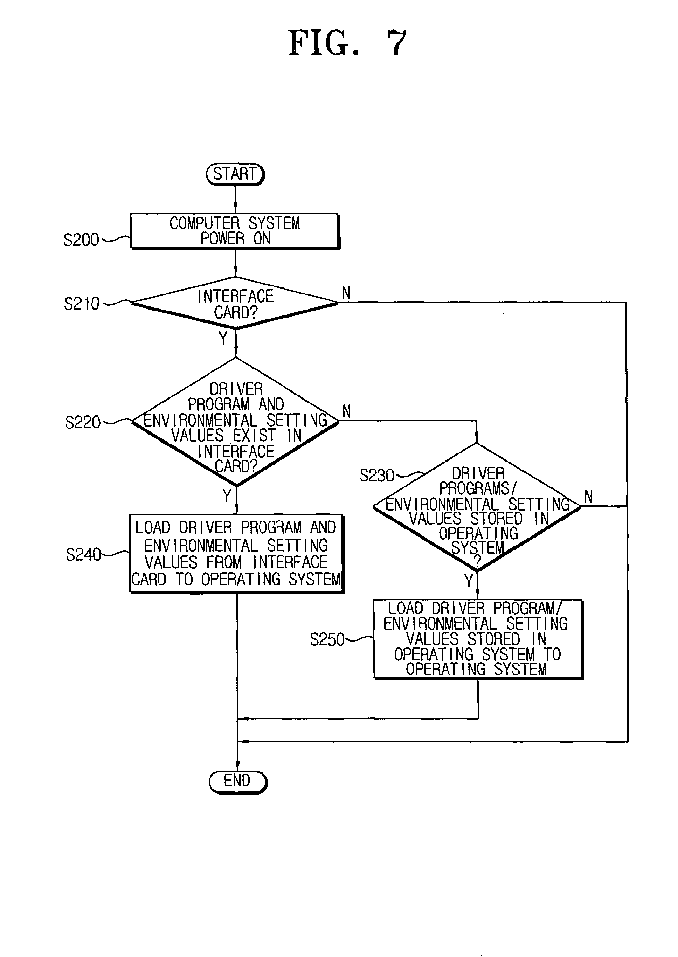

FIG. 7 is a flowchart illustrating a method of setting an interface card consistent with an exemplary embodiment of the present invention.

Referring to FIG. 7, if the power is supplied to the computer system (step S200), the computer system starts the booting. At this time, the computer system detects the interface cards 50 and 60 mounted in the extension slots (for example, PCI slots) provided in the computer system (step S210). If the extension slots are PCI slots, the interface cards 50 and 60 according to the PCI 2.1. standard have two pins PRSTN#1 and PRSTN#2 (Fig. 4) for informing the system of the insertion of the PCI slots, and informs the system of the amount of power usable in the mounted slots according to the potential levels of the two pins. Next, the operating system detects whether the driver programs and the environmental setting values are built in the interface cards 50 and 60 (step S220). If the operating system confirms the existence of the flash ROM 51 mounted in the interface cards 50 and 60, it reads out and performs the scripter file recorded in the flash ROM 51. The scripter file has a command for detecting the kind and the version of the operating system, and a command for loading any one of the driver programs stored in the flash ROM 51 to the operating system according to the kind of the detected operating system. If it is judged by the scripter file that the driver programs and the environmental setting values are stored in the flash ROM 51, the operating system loads in turn the driver programs and the environmental setting values corresponding to the operating system from the flash ROM 51 of the interface cards (step S240). Both the Linux-series (or Unix-series) operating system and the Windows-series operating system can be used as the operating system, and the operating system sequentially receives the driver programs and the environmental setting values stored in the first partition 51 a and the second partition 51b of the flash ROM 51.

Meanwhile, if the interface cards 50 and 60 inserted into the PCI slots PCI 1 to PCI 5 have no flash ROM for storing the driver programs and the environmental setting values, the operating system requests the install of the driver programs to the user. In the case of the Linux-series operating system, the device directory (dev) confirms whether the corresponding driver programs and the environmental setting values exist in the interface card inserted into the PCI slot, and in the case of the Windows-series operating system, the system directory (for example, C:\WINNT\SYSTEM) confirms the existence/nonexistence of the driver programs (step S230). If the driver programs and the environmental setting values exist in the system directory of the operating system as a result of confirming, the operating system loads them (step S250), if not, it terminates the booting process.

After terminating the booting process, the interface card installs the driver program of the interface card through a separate installation program, and the user sets the environmental setting values. As described above, in the case of adding a new interface card to the computer system provided with the operating system, it is not easy for a general user who has a poor experience or knowledge of the corresponding field to set the driver program and the environmental setting values. Consistent with the present invention, the driver programs and the environmental setting values are built in the interface cards, and when the system is booted, the operating system detects the built-in driver programs and environmental setting values, thereby facilitating the addition of a new interface card.

As described above, consistent with the present invention, it is not required for the user to perform a separate setting when the new interface card is installed in the computer system, and any card having a different function in addition to the above-described interface cards can be directly used whenever the card is connected to the computer system, so that the user can easily use the computer system.

While the present invention has been described in detail, it should be understood that various changes, substitutions and alterations can be made hereto without departing from the spirit and scope of the invention as defined by the appended claims.

## Claims

1. A computer system having a display device, an input device, a storage medium, a processor, an operating system, and a local bus capable of performing data transmission with the processor for a predetermined timing, the computer system comprising:
at least one extension slot, provided in the computer system, operable to connect with the local bus; and
at least one interface card, detachably mounted in the extension slot, operable to load built-in driver programs and environmental setting values to the operating system when the computer system is booted in a state that the interface card connects with the extension slot.

2. The computer system as claimed in claim 1, wherein the interface card comprises:
an interface module connectable with the local bus; and
a memory device operable to store the driver programs when said driver programs make the interface module recognized to the operating system and the environmental setting values.

3. The computer system as claimed in claim 2, wherein the memory device is divided into first and second partitions, and the driver programs and the environmental setting values are stored in the first and second partitions.

4. The computer system as claimed in claim 3, wherein the first partition is performed by the operating system when the computer system is booted, and is provided with a scripter file operable to detect information on the operating system.

5. The computer system as claimed in claim 3, wherein the first partition is provided with the driver programs corresponding to the respective operating systems, and loads any one of the provided driver programs to the operating system according to a kind of the operating system detected by the scripter file.

6. The computer system as claimed in claim 3, wherein the second partition loads any one of the stored environmental setting values according to a kind of the operation system detected by the scripter file.

7. The computer system as claimed in claim 1, wherein the operating system is a Unix-series operating system, and is provided with a virtual file system.

8. The computer system as claimed in claim 7, wherein the operating system mounts the interface card by the virtual file system, and sets the driver programs and the environmental setting values stored in the interface card in one tree structure in a file system of the operating system.

9. The computer system as claimed in claim 7, wherein the virtual file system analyzes a file format that the interface card has, and connects a file that the interface card has to the tree structure of the file format that the operating system has according to a result of analysis.

10. An interface card mountable in a computer system driven by a specified operating system and provided with an extension slot for inserting the interface card therein, the interface card comprising:
a connection unit detachably mounted in the extension slot;
an interface module electrically connected with the extension slot by the connection unit; and
a memory device operable to load a driving program for the interface module and environmental setting values for the interface module to the operating system mounted in the computer system.

11. The interface card as claimed in claim 10, wherein the memory device stores therein a driver program corresponding to the operating system.

12. The interface card as claimed in claim 11, wherein the memory device further comprises environmental setting values corresponding to the driver program.

13. The interface card as claimed in claim 12, wherein the memory device is divided into first and second partitions, and the driver programs and the environmental setting values are stored in the first and second partitions.

14. The interface card as claimed in claim 13, wherein the first partition is performed by the operating system when the computer system is booted, and is provided with a scripter file operable to detect information on the operating system.

15. The interface card as claimed in claim 14, wherein the first partition is provided with the driver programs corresponding to at least one operating system, and loads any one of the provided driver programs to the operating system consistent with a kind of the operating system detected by the scripter file.

16. The interface card as claimed in claim 15, wherein the second partition loads any one of the stored environmental setting values consistent with a kind of the operating system detected by the scripter file.

17. A method of setting an interface card in a computer system having a display device, an input device, a storage medium, a processor, an operating system, a local bus capable of performing data transmission with the processor for a predetermined timing, and at least one interface card connectable to and releasable from the local bus, comprising:
booting the computer system;
detecting the interface card having built-in driver programs and environmental setting values; and
loading the driver programs and the environmental setting values built in the detected interface card to the operating system.

18. The method as claimed in claim 17, wherein the driver programs and the environmental setting values are sequentially applied to the operating system when the computer system is booted.

19. The method as claimed in claim 17, wherein the operating system is a Unix-series operating system, and is provided with a virtual file system.

20. The method as claimed in claim 17, wherein loading the driver programs and the environmental setting values comprises:
mounting the driver program built in the interface card in a tree structure when the computer system is booted, and mounting the environmental setting values of the mounted interface card in the tree structure.
